# EUROPÄISCHE PATENTSCHRIFT

(11) **EP 3 664 951 B1**
(45) Veröffentlichungstag und Bekanntmachung des Hinweises auf die Patenterteilung: **16.03.2022**
(21) Anmeldenummer: 18752463.2
(22) Anmeldetag: 07.08.2018
(51) Int. Cl.: B23K 1/00, B23K 11/02, B23K 11/18

(54) **VERFAHREN ZUM WIDERSTANDS-STUMPFSCHWEISSEN**
METHOD OF RESISTANCE BUTT WELDING
MÉTHODE DE SOUDAGE PAR RÉSISTANCE BOUT À BOUT

(30) Priorität: 09.08.2017 DE 102017213899
(43) Veröffentlichungstag der Anmeldung: 17.06.2020
(73) Patentinhaber: Strunk Connect Automated Solutions GmbH & Co. KG, 57548 Kirchen-Freusburg (DE)
(72) Erfinder: STRUNK, Olaf, 57548 Kirchen-Freusburg (DE); MÜNCH, Hans-Herrmann, 51597 Morsbach (DE)
(74) Vertreter: Grosse, Wolf-Dietrich Rüdiger
(86) Internationale Anmeldenummer: PCT/EP2018/071358
(87) Internationale Veröffentlichungsnummer: WO 2019/030212

(56) Entgegenhaltungen:
- FR-A- 939 520
- JP-A- S5 964 176
- JP-A- 2012 223 786

## Beschreibung

Die Erfindung betrifft ein Verfahren zum Widerstands-Stumpfschweißen von Kupfer oder Kupferlegierungen, bei denen mindestens zwei Stumpfstöße aneinandergepresst werden und die Stumpfstöße anschließend derart vom Strom durchflossen werden, dass die im Bereich der Stumpfstöße entstehende Widerstandswärme zumindest einen Anschmelzprozess hervorruft.

Es sind z.B. Elektroanschlüsse in Kraftfahrzeugen bekannt, bei denen ein Anschlusselement z.B. durch Crimpen und/oder Löten mit einem Leiter verbunden ist. Diese, einen gewissen Widerstand aufweisende Verbindung reichte für viele Anwendungen grundsätzlich aus. Sollen jedoch elektrische Verbindungen für hohe Ströme oder Verbindungen mit großen Querschnitten z.B. im automobilen Hochspannungsbereich wie beispielsweise für Elektrofahrzeuge geschaffen werden, durch welche stetig oder im Lastwechsel hohe Ströme fließen, führt der zuvor erwähnte Widerstand bereits zu einer unzulässigen Erwärmung der Verbindung zwischen Anschlusselement und Leiter.

Aus diesem Grunde ist es bereits bekannt, Stromschienen vorzusehen, an welche das Anschlussteil angeschweißt ist. Dazu wird die Stromschiene auf das Anschlusselement gelegt und mittels Punktschweißen miteinander verbunden. Dabei werden auch Zusatzwerkstoffe zwischen den zu verschweißenden Elementen eingesetzt. Durch das verschweißen entsteht eine stoffschlüssige Verbindung, die im Grunde nahezu keinen Übergangswiderstand zwischen dem Anschlussteil und der Stromschiene aufweist.

Es ist auch bekannt, das Anschlusselement mit einem Kabel, welches im Endbereich verfestigt ist punkt zu verschweißen. Auch hier ist kein Übergangswiderstand zu befürchten.

Nachteilig bei dem Punktschweißvorgang ist jedoch, dass die Schweißverbindung durch das aufeinander Schweißen des Anschlusselements und des z.B. Kabels einen sehr hohen Materialaufwand bedeutet und zudem sehr hoch aufbaut. Gerade im Automobilbereich ist ein hohes Gewicht durch hohen Materialaufwand zu vermeiden. Zudem ist jeder Millimeter an zusätzlicher Höhe von Nachteil.

Die DE 10 2009 024 513 A1 oder die DE 20 2010 012 555 U1 offenbaren beispielsweise derartig stark aufbauende Elektroanschlüsse.

Zur Beseitigung dieser Nachteile würden stirnseitige Verbindungen zwischen Anschlusselement und Leiter enorme Vorteile bringen. Ein stirnseitiges Verlöten würde zwar die Platz- und Gewichtsprobleme lösen, der Widersand bei großen Strömen würde aber auch hier eine zu große Erwärmung nach sich ziehen. Um den Widerstand und damit die Erwärmung bei Stromfluss zu verringern wäre ein Stoffschluss zwischen Anschlusselement und Leiter wünschenswert.

Dazu bietet sich ein Stumpfschweißen an. Als Stumpfschweißverfahren ist zunächst das Pressstumpfschweißen bekannt. Dabei werden die vorbearbeiteten Fügeflächen der Stumpfstöße aneinandergepresst und von Strom in der Größenordnung von 380 A/mm² für eine Zeit von 10 bis 20 Sekunden durchflossen bis der Bereich der Schweißstelle auf Schweißtemperatur aufgeheizt ist. Mit Erreichen der gewünschten Temperatur wird der Strom abgeschaltet. Anschließend werden durch eine Vorschubbewegung im Bereich von ca. 5 mm bis 10 mm die Stumpfstöße unter großem Druck von ca. 2500 daN aufeinander gestaucht, wodurch sich entsprechende Verformungen in Form von Wulsten ergeben.

Eine wichtige Voraussetzung für das Pressstumpfschweißen ist, dass die Stumpfstöße sehr exakt bearbeitet und planparallel ausgeführt werden müssen. Sie müssen in ihrer Form und in ihrer Größe übereinstimmen. Oxyde müssen vor dem aneinander Fügen der Flächen beseitigt werden. Das bedeutet einen großen zu tätigenden Aufwand vor dem Pressstumpfschweißen. Die langen Schweißzeiten und Erhitzung größerer Mengen der Grundwerkstoffe in den Schweißzonen bewirken dabei Änderungen der mechanischen Eigenschaften der Grundwerkstoffe und Verfärbungen. Nach Fertigstellung der Schweißung müssen die durch den Druck entstandenen Wülste an den Verbindungsstellen entfernt werden. Das bedeutet, dass zusätzlich noch eine Nachbearbeitung der Verbindung erfolgen muss. Durch die exakten Vorbereitungen und die Nacharbeit sowie die lange Dauer des Schweißvorgangs ist das Pressstumpfschweißen sehr kostenintensiv.

Weiterhin ist das Abbrennstumpfschweißen bekannt. Hier müssen die gegenüberliegenden Flächen nicht mehr so exakt vorbearbeitet werden. Bei sehr hoher Stromdichte während des Schweißvorgangs werden eventuelle Unebenheiten umgehend verflüssigt und die Materialien verdampfen. Bei diesem Abbrennen der Stoßenden wird entsprechend flüssiger Werkstoff ausgeschleudert. Die flüssigen Enden werden anschließend aufeinandergepresst. Dabei entsteht ein Stauchgrat, der ebenfalls durch spätere Behandlung mechanisch entfernt werden muss. Auch hier werden keine Zusatzwerkstoffe oder Flussmittel eingesetzt.

Nachteilig bei diesem Verfahren sind jedoch das Spritzen des flüssigen Metalls, der hohe Aufwand, der betrieben werden muss, damit das Herumspritzen des flüssigen Metalls keinen Schaden anrichtet, das Nachbearbeiten der Schweißnaht und insbesondere die sehr hohe Schweißenergie, die benötigt wird.

Der Oberbegriff des Anspruchs 1 basiert auf der JP S59 64176, welche ein Verschweißen von Stümpfen offenbart, zwischen die ein ringförmiges Lot eingebracht wird, welches in seiner Querschnittsform der Querschnittsform der zu verschweißenden Stümpfe entspricht, und welches einen höheren spezifischen Widerstand aufweist als die zu verschweißenden Stümpfe. Durch entsprechende Strombeaufschlagung wird das Lot mit dem höheren spezifischen Widerstand und die auf den zu verschweißenden Stümpfen befindlichen Verunreinigungen wie z.B. ein Oxidfilm angeschmolzen. Durch anschließenden Druck auf die Verbindungsstellen der Stümpfe kommen die Verunreinigungen in Fluss so dass darunter saubere, aktive Flächen der Stümpfe freigelegt werden, die anschließend verschweißt werden können.

Weiterhin ist zum Verschweißen von Stumpfstößen das Kammerschweißen bekannt. Dieses ähnelt dem Abbrennstumpfschweißen, die Bauteile werden jedoch in ein Rohr, meist aus keramischem Material, eingebracht, werden aneinander geführt und dann vom Strom durchflossen und unter stetigem Vorschub zusammengeschweißt. Dieses Verfahren wird jedoch in der Regel lediglich zur Verbindung von Litzen miteinander verwendet, da schon die Verbindung unterschiedlicher Querschnitte sehr aufwendiger keramischer Rohre bedürfte.

Auch mittels Diffusionsschweißen, mit oder ohne Zusatzstoff sind Stumpfverbindungen möglich. Durch Schweißzeiten größer einer Minute und den notwendigen Einsatz eines Schutzgases wird der Schweißvorgang sehr teuer.

Der Erfindung liegt die Aufgabe zugrunde, die oben aufgeführten Nachteile beim Widerstands-Stumpfschweißen von Metallen auszuräumen, d. h. der lokale Energieeintrag soll sich in Maßen halten, ein Vorabbearbeiten der Stumpfstöße und ein Nachbearbeiten der Schweißstellen sollen entfallen. Dadurch soll ein sehr kostengünstiges Widerstands-Stumpfschweißverfahren, welches auch für Massenfertigungen geeignet ist, angeboten werden können.

Zur Lösung der Aufgabe wird vorgeschlagen, dass die Metalle möglichst nahe dem Bereich der Stumpfstöße von den Spannelektroden gehalten werden, dass vor dem Aneinanderpressen der Stumpfstöße ein Zusatzwerkstoff zwischen den Stumpfstößen derart platziert wird, dass der Zusatzwerkstoff beim Aneinanderpressen der Stumpfstöße zwischen den Stumpfstößen eingeklemmt wird, wobei die Größe des Zusatzwerkstoffes die Größe des kleinsten Stumpfstoßes unterschreitet, und dass nach dem Schweißvorgang durch vorherige Vorgabe der Stromstärke und/oder der Bestromungszeit und/oder der Anpresskraft und/oder der Lotdicke weder Wulste noch Grate noch Materialaustritte zu verzeichnen sind.

Durch das Greifen der Metalle so nahe den Stumpfstößen, das nach erfolgtem Schweißvorgang sich die Elektroden gerade noch nicht berühren, und es zu keinem Kurzschluss zwischen den Elektroden kommt, wird erreicht, dass die Metalle nur exakt im Bereich der Stumpfstöße erhitzt werden. Energieverluste durch großräumiges Aufheizen der Metalle wie beim Pressstumpfschweißen werden vermieden.

Durch Ströme größer 400 A/mm² vorzugsweise größer 500 A/mm² kann ein schnelles Verschweißen ohne Wulstbildung und ohne Austritt von Lot aus dem Bereich der Stumpfstöße erreicht werden.

Auch Bestromungszeiten kleiner 1,5 Sekunden vorzugsweise kleiner 1 Sekunde in denen die Stumpfstöße miteinander verschweißt werden verhindern eine Wulstbildung sowie den Austritt von Lot aus dem Bereich der Stumpfstöße. Durch die kurzen Schweißzeiten bleiben die mechanischen Eigenschaften der Grundwerkstoffe weitestgehend erhalten.

Druckkräfte um nur 600 daN reichen aus, die Verschweißung zu bewirken, ohne dass Wulste gebildet werden.

Die Lot-Blättchen kleiner als den kleinsten Stumpfstoß zu bemessen und in ihrer Dicke zwischen 0,05 bis 0,5 mm vorzugsweise zwischen 0,1 bis 0,3 mm zu bemessen bewirkt, dass bei den kurzen Schweißzeiten das Lot und die mit diesem in Kontakt befindlichen Bereiche der Stumpfstöße trotz möglicher unterschiedlicher Schmelzpunkte fast geleichzeitig schmelzen, so dass das Lot gleich in die Stumpfstöße eindiffundieren kann, ohne dass es aus dem Bereich zwischen den Stumpfstößen herausgequetscht wird.

Nach Abkühlung der Schweißung liegt eine stoffschlüssige sehr stabile reißfeste Verbindung der beiden Metallteile vor, der einen Übergangswiderstand zwischen den Metallteilen gegen Null aufweist. Der Widerstand entspricht im Grunde dem Widerstand der Ausgangsmaterialien. Da die Schweißung im Bereich des Zusatzwerkstoffes erfolgt, lässt sich die Schweißverbindung so gestalten, dass keine Nachbehandlung notwendig wird. Es entstehen also weder Wulste noch Grate noch Materialaustritte. Eine aufwändige Vorabbehandlung der Stumpfstöße ist beim Einsatz von Zusatzwerkstoffen ebenfalls nicht erforderlich.

Es hat sich bewährt, als Zusatzwerkstoff ein Hartlot zu verwenden. Dadurch wird die Stoffschlüssigkeit der Verbindung gewährleistet.

Es hat sich bewährt, dass die Metalle gleiche oder ungleiche Konsistenz bzw. mechanische Eigenschaften aufweisen können. Damit lässt sich z. B. ein Kupferblock mit einer festen, gleiche mechanische Eigenschaften aufweisenden Kupferschiene aber auch ein Kupferblock mit einer Kupferlitze verschweißen.

Von Vorteil ist, dass die Stumpfstöße gleiche oder ungleiche Querschnitte und / oder Geometrien aufweisen können. Die Schweißverbindung entsteht dann lediglich im Bereich der sich deckenden Stümpfe. Somit lassen sich z.B. auch runde mit eckigen Leitern verschweißen.

Es hat sich bewährt, dass sich während der Bestromung der Stumpfstöße im Bereich des Zusatzwerkstoffs eine Schweißlinse bildet, welche die Stumpfstöße und den Zusatzwerkstoff erfasst und dass der Pressdruck nach Abschalten des Schweißstroms bis zur Verfestigung der Schweißlinse aufrechterhalten wird. Die dazu notwendige Stromstärke bzw. Energie ist in ihrer Größe in Abhängigkeit der zu verbindenden Teile vorgebbar einstellbar.

Weitere Vorteile ergeben sich durch die folgenden Verfahrensschritte:
1. Klemmen der zu verbindenden Metalle im Bereich der Stumpfstöße der Metalle jeweils zwischen mindesten zwei Elektroden, wobei jeweils mindestens eine der mindestens zwei Elektroden beweglich ist,
2. Positionieren des in seiner Größe und Menge vorgebbaren Zusatzwerkstoffs zwischen den Stümpfen,
3. Bewegen mindestens eines Stumpfstoßes auf den zweiten Stumpfstoß zu,
4. Klemmen des Zusatzwerkstoffes zwischen den beiden Stumpfstößen,
5. Pressen der Stumpfstöße aneinander unter vorgebbarer Kraft,
6. Bestromung der Stumpfstöße über die Elektroden, wobei die Bestromung bis zum Zustandekommen der zwischen den Stumpfstößen entstehenden Schweißverbindung parametrisierbar ist,
7. Lösen der Klemmverbindung nach erfolgter Verschweißung, und
8. Überwachung und Steuerung oder Regelung der notwendigen Prozessparameter, die auf die Stumpfstöße während der Verfahrensschritte 1 bis 7 wirken.

Bereits durch die Verwendung mindestens zweier Elektroden zur Einklemmung jedes der Stumpfstöße wird erreicht, dass der notwendige Strom auf zwei Elektroden aufgeteilt wird, die zudem zwar möglichst nahe der Stumpfstöße von dem Hochtemperatur-Schweißbereich jedoch noch ausreichend entfernt angreifen, so dass sie nur einen sehr geringen Verschleiß aufweisen und kostengünstig zu Betreiben sind, anders als z. B. beim Punktschweißen, wo der gesamte Strom über nur ein Elektrodenpaar fließt, welches sich zudem noch im direkten Kontakt mit dem Hochtemperatur-Schweißbereich befindet, wodurch sich das Elektrodenpaar stark abnutzt.

Als einer der Prozessparameter ist die Größe des Zusatzwerkstoffes, z. B. des Hartlotes und auch seine Menge bzw. Dicke eingebbar, so dass im Grunde auch die Ausbildung der Schweißlinse in ihrer Größe über die Vorgaben zum Zusatzwerkstoff einstellbar ist. Weitere Prozessparameter sind der Druck, die Stromstärke, die Zeit sowie die Wege.

Das Verfahren ist manuell, halb-automatisch oder vollautomatisch betreibbar.

Bedeutsam ist, dass einer der Stumpfstöße von einem Bereich eines Anschlusselements, und der zweite Stumpfstoß vom Ende einer Stromschiene oder einem, ggf. zuvor verfestigten Bereich eines Anschlusskabels gebildet werden.

Dadurch wird eine platzsparende Verbindung ermöglicht, die keine Übergangswiderstände aufweist und wegen fehlender Vor- und Nachbearbeitung sehr günstig herzustellen ist.

Vorrichtungsmäßig ist es von Vorteil,
wenn jeweils mindestens zwei Elektroden zur Aufnahme und Festlegung jedes der zu verbindenden Metallstümpfe vorgesehen sind, wobei mindestens eine der jeweils mindestens zwei Elektroden beweglich ausgeführt ist,
wenn eine Vorrichtung zur Positionierung des Zusatzwerkstoffes im Raum zwischen den Stumpfstößen der zu verbindenden Metalle vorgesehen ist,
wenn mindestens eine Führung auf der eine Trageinheit für die beiden Elektroden für mindestens einen der Metallstümpfe derart angeordnet ist, dass die Trageinheit auf die beiden Elektroden für den mindestens zweiten Metallstumpf zu bewegbar ist,
wenn einen Antrieb für die Trageinheit vorgesehen ist,
wenn die Vorrichtung eine Stromversorgung für die mindestens vier Elektroden aufweist, und
wenn eine Steuer- bzw. Regelvorrichtung zur Einstellung der Schweißparameter wie Schweißdruck und / oder des Verschiebeweg der Trageinheit und / oder Höhe des Schweißstroms über die Zeit und / oder der Zusatzwerkstoff-Menge und / oder der Zusatzwerkstoff-Position vorgesehen ist.

Vorteilhaft ist die Verwendung mindestens zweier Elektroden pro Metallstumpf, so dass sich der notwendige Schweißstrom aufteilt. Hinzu kommt, dass die Elektroden die zu verschweißenden Metalle in Abhängigkeit von deren Festigkeit und dem zwischen diesen aufzubringenden Druck nur in unmittelbarer Nähe der Stumpfstöße festklemmen müssen, so dass die Elektroden während des Schweißvorgangs keinen direkten Kontakt zur Verbindungsfläche haben und damit auch kaum durch die beim schweißen entstehende Hitze belastet werden.

Nachahmenswert ist, dass den Elektroden Zuführ- und Positioniervorrichtungen für die, die zu verschweißenden Stümpfe aufweisenden Metalle zugeordnet sind, dass den Elektroden Klemmvorrichtungen zum Festlegen der Metallstümpfe zugeordnet sind, dass die Vorrichtung zum Positionieren des Zusatzwerkstoffes einen Antrieb zum Positionieren des Zusatzstoffes zwischen den Stumpfstößen aufweist und dass die Trageinheit kraftbetrieben gesteuert bzw. geregelt, vorzugsweise über Zylinder antreibbar ist, wobei über den Kraftantrieb der Schweißdruck einstellbar ist.

Dabei kann der Antrieb zum Positionieren des Zusatzstoffes, z.B. Hartlot manuell oder automatisch erfolgen, und das Hartlot in Stücken oder direkt von einem Band zugeführt werden.

Zur Herstellung von beispielsweise Verbindungen zwischen Anschlusselement und Kabel oder Stromschiene oder Rundlitze oder Flachlitze oder Lamellenband usw. kann die erfindungsgemäße Vorrichtung selbstverständlich auch doppelte Stumpfschweißverbindungen herstellen, d. h. an beiden Enden z.B. des Kabels können gleichzeitig oder zeitversetzt in der Vorrichtung entsprechende Anschlusselemente angeschweißt werden. Dadurch kann in einem Bearbeitungsvorgang der komplette elektrische Verbinder erstellt werden, wobei keine Vorbearbeitung der Verbindungsstellen und auch keine Nachbehandlung der Schweißstellen notwendig wird.

Die Erfindung wird anhand einer Zeichnung näher erläutert. Dabei zeigt
- Figur 1: eine erfindungsgemäße Vorrichtung, bei der eine Kabellitze mit einem Anschlussteil verbunden werden kann und
- Figur 2: eine erfindungsgemäße Vorrichtung, nach der ein Kabel mit zwei Anschlussteilen verschweißbar ist.

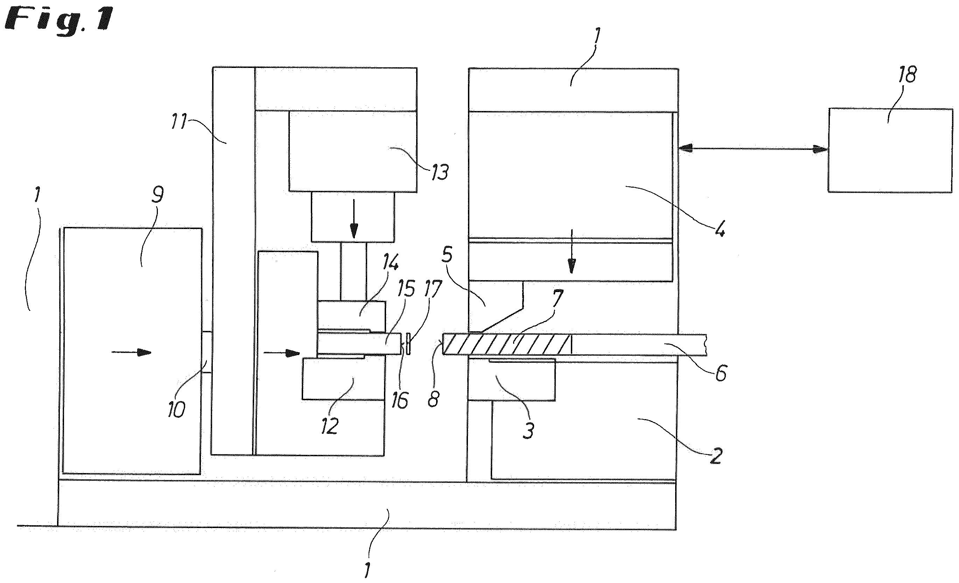

Figur 1 zeigt ein Gehäuse 1, mit dem eine Halterung 2 fest verbunden ist. Die Halterung 2 trägt eine feststehende Elektrode 3. Das Gehäuse 1 haltert zudem eine Antriebseinheit 4, für die der Elektrode 3 gegenüberstehende bewegliche Elektrode 5. Zwischen der feststehenden Elektrode 3 und der beweglichen Elektrode 5 ist ein Kabel 6 geklemmt. Die Klemmung erfolgt im verfestigten Bereich 7 des Kabels 6. Dabei erfolgt die Klemmung in Abhängigkeit von der Festigkeit des verfestigten Kabelendes so, dass die Elektroden 3 und 5 möglichst nahe dem Stumpfstoß 8 sind. Dadurch werden die Elektroden 3 und 5 beim Schweißvorgang kaum durch die an der Schweißverbindung entstehende Hitze negativ beeinflusst, zu viel Material des Kabels wird aber auch nicht erwärmt.

Im Gehäuse 1 ist weiterhin eine Halterung 9 fest angeordnet, die über eine Führung 10 eine Trageinheit 11 haltert. Die Trageinheit 11 ist über die Führung 10 auf die Elektroden 3 und 5 zu bewegbar ausgeführt.

Die Trageinheit 11 haltert dabei eine gegenüber der Trageinheit 11 feststehende Elektrode 12 und über eine Antriebseinheit 13 eine gegenüber der Trageinheit 11 und der Elektrode 12 bewegliche Elektrode 14. Zwischen den Elektroden 12 und 14 ist das Anschlusselement 15 eingeklemmt. Auch das Anschlusselement 15 steht mit seinem Stumpfstoß 16 möglichst nahe zu den Elektroden 12 und 14, dass die beim Schweißen entstehende Hitze im Bereich der Stumpfstöße 8 und 16 die Elektroden 12 und 14 zwar nur unwesentlich beeinflusst, jedoch nicht zu viel Material des Anschlusselements 15 aufgeheizt wird.

Die Elektroden 3 und 5 sowie 12 und 14 sind so nahe zu den jeweiligen Stumpfstößen 6, 16 platziert, dass sich die Elektroden 3 und 12 sowie 5 und 14 nach erfolgten Schweißvorgang gerade nicht berühren.

Zwischen den Stumpfstößen 8 und 16 ist ein Zusatzwerkstoff 17 platziert, der über eine nicht dargestellte Haltevorrichtung manuell oder automatisch in den Spalt zwischen die Stumpfstöße 8 und 16 platziert wird.

Nach dem Einklemmen des verfestigten Bereichs 7 des Kabels 6 zwischen den Elektroden 3 und 5 und dem Einklemmen des Anschlusselements 15 zwischen den Elektroden 12 und 14, wird die Trageinheit 11 auf die Halterung 2 zu bewegt. Dabei wird der Zusatzwerkstoff 17 zwischen den Stumpfstößen 8 und 16 eingeklemmt. Anschließend kann von einer Steuer- bzw. Regelvorrichtung 18, die auch schon die Einklemmvorgänge steuert bzw. regelt, ein Stromfluss zwischen den Elektroden 3 und 5 sowie 12 und 14 bewirkt werden. Dabei wird durch die entstehende Widerstandswärme zwischen den Stumpfstößen 8 und 16 der Zusatzwerkstoff 17 und Bereiche der Stumpfstöße 8 und 16 nahezu gleichzeitig verflüssigt. Durch weiteres Anpressen des Anschlusselements 15 mittels der Trageinheit 11 gegen den verfestigten Bereich 7 des Kabels 6 werden eventuelle Einsinkwege ausgeglichen. Nach Abschalten des Stroms wird der Druck noch so lange aufrechterhalten, bis die verflüssigten Bereiche der Stumpfstöße 8 und 16 wieder verfestigt sind. Damit ist eine stoffschlüssige Verbindung zwischen dem Anschlusselement 15 und dem Kabel 6 entstanden.

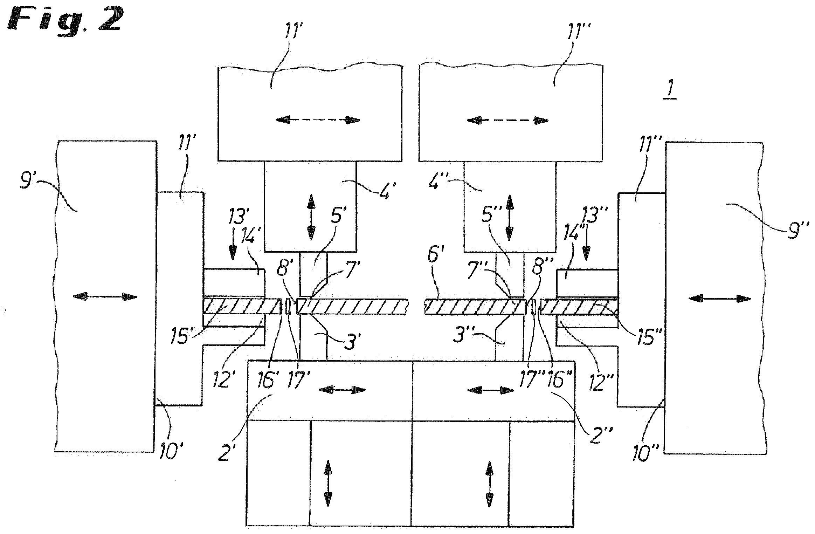

Figur 2 zeigt ein Kabel 6', dessen beiden verfestigten Bereiche 7' und 7" zwischen beweglichen Elektroden 3' und 3" und 5' und 5" eingeklemmt sind. Über die Trageinheiten 11' und 11" werden die Anschlusselemente 15' und 15" zunächst gegen die Zusatzwerkstoffe 17', 17" und anschließend gegen die Stumpfstöße 8. 8" gepresst. Anschließend kann durch entsprechenden Stromfluss die gleichzeitige bzw. kurz hintereinander erfolgende Verschweißung des Kabels 6' mit den Anschlusselementen 15', 15" erfolgen.

Auch hier ist eine Nachbearbeitung der zwischen den jeweiligen Stumpfstößen 8 und 16 entstehenden Schweißnaht nicht erforderlich, da hier weder Wulste noch Stauchgrate entstehen. Der Energieeintrag ist so geregelt, dass nicht nur eine Diffusionen, sondern ein Erschmelzen der zu verschweißenden Materialien stattfindet, dass aber keine Verdampfung von Metallen im Bereich der Stumpfstöße erfolgt. Damit ist der elektrische Verbinder sehr kostengünstig zu erstellen.

### Bezugszeichen

- 1: Gehäuse
- 2: Halterung
- 3: Elektrode
- 4: Antriebseinheit
- 5: Elektrode
- 6: Kabel
- 7: verfestigter Bereich
- 8: Stumpfstoß
- 9: Halterung
- 10: Führung
- 11: Trageinheit
- 12: Elektrode
- 13: Antriebseinheit
- 14: Elektrode
- 15: Anschlusselement
- 16: Stumpfstoß
- 17: Zusatzwerkstoff
- 18: Steuer. Bzw. Regelvorrichtung

## Patentansprüche

1. Verfahren zum Widerstands-Stumpfschweißen von, durch Spannelektroden gehaltenen, aus Kupfer oder Kupferlegierungen bestehenden zu verbindenden Metallen, bei dem mindestens zwei Stumpfstöße (8, 16) aneinander gepresst werden und die Stumpfstöße (8, 16) anschließend derart vom Strom durchflossen werden, dass die im Bereich der Stumpfstöße (8, 16) entstehende Widerstandswärme zumindest einen Anschmelzprozess hervorruft, wobei die Metalle möglichst nahe dem Bereich der Stumpfstöße von den Spannelektroden gehalten werden, und wobei vor dem Aneinanderpressen der Stumpfstöße (8, 16) ein Zusatzwerkstoff (17) zwischen den Stumpfstößen (8, 16) derart platziert wird, dass der Zusatzwerkstoff (17) beim Aneinanderpressen der Stumpfstöße (8, 16) zwischen den Stumpfstößen (8, 16) eingeklemmt wird, **dadurch gekennzeichnet, dass** die Größe des Zusatzwerkstof-
fes die Größe der Stumpfstöße unterschreitet, und
dass nach dem Schweißvorgang durch vorherige Vorgabe der Stromstärke und/oder der Bestromungszeit und/oder der Anpresskraft und/oder der Dicke des Zusatzwerkstoffes weder Wulste noch Grate noch Materialaustritte zu verzeichnen sind.

2. Verfahren nach Anspruch 1,
**dadurch gekennzeichnet,**
**dass** der Zusatzwerkstoff (17) ein Hartlot ist.

3. Verfahren nach Anspruch 1 oder 2 ,
**dadurch gekennzeichnet,**
**dass** die Metalle gleiche oder ungleiche Konsistenz- bzw. mechanische Eigenschaften aufweisen.

4. Verfahren nach einem der Ansprüche 1 bis 3,
**dadurch gekennzeichnet,**
**dass** die Stumpfstöße (8, 16) gleiche oder ungleiche Querschnitte und/oder Geometrien aufweisen.

5. Verfahren nach einem der Ansprüche 1 bis 4,
**dadurch gekennzeichnet,**
**dass** sich während der Bestromung der Stumpfstöße (8, 16) im Bereich des Zusatzwerkstoffs (17) eine Schweißlinse bildet, welche die Stumpfstöße (8, 16) und den Zusatzwerkstoff (17) erfasst, und dass der Pressdruck nach Abschaltung des Schweißstroms bis zur Verfestigung der Schweißlinse aufrechterhalten wird.

6. Verfahren nach einem der Ansprüche 1 bis 5,
**gekennzeichnet durch** die folgenden Verfahrensschritte:
1. Klemmen der zu verbindenden Metalle im Bereich der Stumpfstöße (8, 16) der Metalle jeweils zwischen mindestens zwei Elektroden (3, 12; 5, 14), wobei jeweils mindestens eine der mindestens zwei Elektroden beweglich ist,
2. Positionierung des in seiner Größe und Dicke vorgebbaren Zusatzwerkstoffes (17) zwischen den Stumpfstößen (8, 16),
3. Bewegen mindestens eines Stumpfstoßes (16) auf den zweiten Stumpfstoß (8) zu,
4. Klemmen des Zusatzwerkstoffes (17) zwischen den beiden Stumpfstößen (8, 16),
5. Pressen der Stumpfstöße (8, 16) aneinander unter vorgebbarem Druck,
6. Bestromung der Stumpfstöße (8, 16) über die Elektroden (3, 5; 12, 14), wobei die Bestromung bis zum Zustandekommen der zwischen den Stumpfstößen (8, 16) entstehenden Schweißverbindung parametrisierbar ist,
7. Lösen der Klemmverbindungen nach erfolgter Verschweißung,
8. Überwachung und Steuerung oder Regelung der notwendigen Prozessparameter, die auf die Stumpfstöße (8, 16) während der Verfahrensschritte 1 bis 7 wirken.

7. Verfahren nach einem der Ansprüche 1 bis 6,
**dadurch gekennzeichnet,**
**dass** einer der Stumpfstöße (16) von einem Bereich eines Anschlusselementes (15), und der zweite Stumpfstoß (8) vom Ende einer Stromschiene oder einem, ggf. zuvor verfestigten Bereich (7) eines Anschlusskabels (6) gebildet werden.

## Claims

1. Method for resistance butt welding of metals to be joined by clamping electrodes, made of metals to be joined consisting of copper or copper alloys, in which at least two butt joints (8, 16) are pressed against one another, and current is subsequently flowed through the butt joints (8, 16) in such a way that the resistance heat generated in the region of the butt joints (8, 16) causes at least one melting process,
wherein
the metals are kept as close as possible to the region of the butt joints by the clamping electrodes,
and wherein,
before pressing the butt joints (8, 16) against one another, a filler material (17) is placed between the butt joints (8, 16) in such a way that the filler material (17) is clamped between the butt joints (8, 16) when the butt joints (8, 16) are pressed against one another, **characterized in that**
the dimensions of the filler material are less than the dimensions of the butt joints, and
that, after the welding process, thereby specifying the current strength and/or the duration of current supply and/or the pressing force and/or the thickness of the filler material, neither beading nor burring nor material discharge is registered.

2. Method according to Claim 1,
**characterized in that**
the filler material (17) is a hard solder.

3. Method according to Claim 1 or 2,
**characterized in that**
the metals have the identical or differing consistency or mechanical characteristics.

4. Method according to one of the Claims 1 to 3,
**characterized in that**
the butt joints (8, 16) have identical or differing cross-sections and/or geometries.

5. Method according to one of the Claims 1 to 4,
**characterized in that**,
whilst current is applied to the butt joints (8, 16) in the region of the filler material (17), a weld nugget is formed, which grasps the butt joints (8, 16) and the filler material (17), and that the pressing force is maintained after switching off the welding current until the weld nugget solidifies.

6. Method according to one of the Claims 1 to 5,
**characterized by** the following method steps:
1. clamping of the metals to be joined in the region of the butt joints (8, 16) of the metals between at least two electrodes (3, 12; 5, 14), wherein at least one of the at least two electrodes is moveable,
2. positioning of the filler material (17), the dimensions and thickness of which are specifiable, between the butt joints (8, 16),
3. moving at least one butt joint (16) towards the second butt joint (8),
4. clamping of the filler material (17) between the two butt joints (8, 16),
5. pressing the butt joints (8, 16) together under the specifiable pressure,
6. applying current to the butt joints (8, 16) via the electrodes (3, 5; 12, 14), wherein the current supply can be parameterized until the formation of the weld joint formed between the butt joints (8, 16),
7. detaching the clamping connections after welding,
8. monitoring and controlling or regulating the necessary process parameters acting on the butt joints (8, 16) during method steps 1 to 7.

7. Method according to one of the Claims 1 to 6,
**characterized in that**
one of the butt joints (16) is formed by a region of a connection element (15), and the second stump joint (8) is formed by the end of a conductor rail or a previously solidified region (7) of a connection cable (6).

## Revendications

1. Procédé de soudage bout à bout par résistance de métaux à relier composés de cuivre ou alliages de cuivre, maintenus par des électrodes de serrage, pour lequel au moins deux assemblages bout à bout (8, 16) sont comprimés l'un contre l'autre et les assemblages bout à bout (8, 16) sont ensuite traversés par du courant de telle manière que dans la zone des assemblages bout à bout (8, 16), la chaleur de résistance se produisant cause au moins un processus d'assemblage par fusion,
sachant que
les métaux sont maintenus le plus près possible de la zone des assemblages bout à bout par des électrodes de serrage,
et sachant qu'7
avec la compression l'un contre l'autre des assemblages bout à bout (8, 16), un matériau d'apport (17) est placé entre les assemblages bout à bout (8, 16) de telle manière que le matériau d'apport (17) est enserré entre les assemblages bout à bout (8, 16) lors de la compression l'un contre l'autre des assemblages bout à bout (8, 16), **caractérisé en ce que**
la taille du matériau d'apport est inférieure à la taille des assemblages bout à bout, et
**en ce qu'**après le processus de soudage, on n'enregistre aucun bourrelet, ni bavure, ni non plus de débordement de matériau grâce à la définition préalable de l'intensité de courant et/ou du temps d'alimentation en courant et/ou de la force de compression et/ou de l'épaisseur du matériau d'apport.

2. Procédé selon la revendication 1,
**caractérisé en ce que**
le matériau d'apport (17) est une brasure.

3. Procédé selon la revendication 1 ou 2,
**caractérisé en ce que**
les métaux comportent des propriétés de consistance ou mécaniques égales ou inégales.

4. Procédé selon l'une quelconque des revendications 1 à 3,
**caractérisé en ce que**
les assemblages bout à bout (8, 16) comportent des sections et/ou géométries égales ou inégales.

5. Procédé selon l'une quelconque des revendications 1 à 4,
**caractérisé en ce que**
pendant l'application de courant des assemblages bout à bout (8, 16), il se forme dans la zone du matériau d'apport (17), un point de soudure lentiforme, lequel saisit les assemblages bout à bout (8, 16) et le matériau d'apport (17) et **en ce que** la pression de compression est maintenue après arrêt du courant de soudage jusqu'à la solidification du joint de soudure lentiforme.

6. Procédé selon l'une quelconque des revendications 1 à 5,
caractérisé pat les étapes de procédé suivantes :
1. serrage des métaux à relier dans la zone des assemblages bout à bout (8, 16) des métaux entre respectivement au moins deux électrodes (3, 12 ; 5, 14), sachant respectivement qu'au moins une des au moins deux électrodes est mobile,
2. positionnement du matériau d'apport (17) prédéfinissable dans sa taille et son épaisseur entre les assemblages bout à bout (8, 16),
3. déplacement au moins d'un assemblage bout à bout (16) vers le deuxième assemblage bout à bout (8),
4. serrage du matériau d'apport (17) entre les deux assemblages bout à bout (8, 16),
5. compression des assemblages bout à bout (8, 16) l'un contre l'autre sous une pression prédéfinissable,
6. alimentation en courant des assemblages bout à bout (8, 16) par les électrodes (3, 5 ; 12, 14), sachant que l'alimentation en courant peut être paramétrée jusqu'à l'obtention de la liaison par soudage se produisant entre les assemblages bout à bout (8, 16),
7. desserrage des liaisons de serrage une fois le soudage effectué,
8. contrôle et commande ou réglage des paramètres de processus nécessaires, qui agissent sur les assemblages bout à bout (8, 16) pendant les étapes de procédé 1 à 7.

7. Procédé selon l'une quelconque des revendications 1 à 6,
**caractérisé en ce qu'**
un des assemblages bout à bout (16) est formé par une zone d'un élément de raccord (15) et le deuxième assemblage bout à bout (8) par une extrémité d'un rail conducteur ou une zone (7) préalablement solidifiée le cas échant d'un câble de connexion (6).
